# EUROPÄISCHE PATENTSCHRIFT

(11) **EP 2 414 107 B1**
(45) Veröffentlichungstag und Bekanntmachung des Hinweises auf die Patenterteilung: **26.04.2017**
(21) Anmeldenummer: 10713599.8
(22) Anmeldetag: 26.03.2010
(51) Int. Cl.: B05C 17/005, B29C 47/00, B29C 47/38

(54) **HANDSCHWEIßEXTRUDER**
HAND WELDING EXTRUDER
EXTRUDEUSE DE SOUDAGE À LA MAIN

(30) Priorität: 03.04.2009 DE 202009004610 U
(43) Veröffentlichungstag der Anmeldung: 08.02.2012
(73) Patentinhaber: Dohle Extrusionstechnik GmbH, 53809 Ruppichteroth (DE)
(72) Erfinder: DOHLE, Peter Christian, 53809 Ruppichteroth (DE)
(74) Vertreter: Fritz, Edmund Lothar
(86) Internationale Anmeldenummer: PCT/EP2010/054043
(87) Internationale Veröffentlichungsnummer: WO 2010/112434

(56) Entgegenhaltungen:
- EP-A2- 1 422 045
- EP-A2- 1 647 392
- DE-A1- 2 604 807
- DE-A1- 3 236 173
- DE-A1-102006 035 250

## Beschreibung

Die vorliegende Erfindung betrifft einen Handschweißextruder umfassend eine Extrudereinheit mit Extruderschnecke und Extruderdüse, an die sich in Förderrichtung des Extrudats ein gegenüber einem Extrudergehäuse vorstehender Düsenrohrabschnitt anschließt mit einem inneren Kanal, aus dem das Extrudat austritt, sowie weiter umfassend einen Schweißschuh am vorderen Ende des Geräts, über den das Schmelzgut ausgebracht wird, wobei der Schweißschuh auf dem Düsenrohrabschnitt befestigbar ist und wobei insbesondere ein einstückiger Schweißschuh aus Kunststoff vorgesehen ist, der sowohl einen schweißnahtbildenden vorderen Abschnitt als auch einen auf dem Düsenrohrabschnitt zu befestigenden mittleren und/oder hinteren Abschnitt des Schweißschuhs umfasst, gemäß dem Oberbegriff des Anspruchs 1.

Für das Kunststoffschweißen werden heute üblicherweise Handschweißextruder verwendet, bei denen über einen Drahteinzug das Schweißmaterial einer Extruderschnecke zugeführt und von dieser granuliert wird. Die Extruderschnecke drückt das Granulat in die Schmelzkammer, wo es aufgeschmolzen wird und aus der Extruderdüse austritt. Die Fügeteile werden mittels einer an dem Handschweißextruder angebrachten Heißluftdüse auf die Schweißtemperatur erwärmt. Zur schweißnahtbildenden Ausbringung des Schmelzguts auf die zu verschweißenden Fügeteile wird ein Schweißschuh verwendet, der auf dem vorderen Endbereich des Düsenrohrs der Extruderdüse befestigbar ist. Für unterschiedliche Anwendungszwecke werden je nach Form der herzustellenden Schweißnaht entsprechend geformte Schweißschuhe eingesetzt. Es ist aus dem Stand der Technik bekannt, Schweißschuhe zu verwenden, die teilweise aus Kunststoffen wie PTFE (Teflon) bestehen, wie dies beispielsweise in der DE 10 2005 044 465 A1 beschrieben ist.

Bei den handelsüblichen Geräten besteht jedoch nur der vordere Abschnitt des Schweißschuhs aus Kunststoff, während der hintere Abschnitt, welcher mit dem Düsenrohr verbunden wird, aus Metall besteht. Auch in der DE 20 2007 014 873 U1 kann man einen solchen zweiteiligen Schweißschuh erkennen. Der metallische hintere Abschnitt des Schweißschuhs wird mittels einer radialen Schraube auf einen vorderen Abschnitt des Düsenrohrs geschraubt. Das Problem bei diesen bekannten Schweißschuhen besteht darin, dass sich die beiden Abschnitte aufgrund der unterschiedlichen Werkstoffe bei Erwärmung verschieden stark ausdehnen. Im Bereich der Naht zwischen beiden Abschnitten des Schweißschuhs kommt es daher zur Ausbildung von Spalten. Wenn bei Temperaturen von 250 ° C die Kunststoffschmelze mit Druck durch das Düsenrohr gepresst wird und in den Kanal des Schweißschuhs gelangt, entstehen in diesem kritischen Bereich zwischen den Abschnitten aus verschiedenen Werkstoffen Undichtigkeiten, an denen Kunststoffschmelze austreten kann. Der Schweißschuh wird dadurch verunreinigt und nach Erkalten der Schmelze lassen sich diese Verunreinigungen oft nicht mehr entfernen, so dass der Schweißschuh unbrauchbar wird. Auch die Trennung des Schweißschuhs von der Düse bei einem notwendigen Wechsel des Schweißschuhs kann aufgrund der Verunreinigungen mit Schwierigkeiten verbunden sein.
Um diese Problematik zu überwinden, war es das Ziel Anmelderin, einen Handschweißextruder zu entwickeln, bei dem der Schweißschuh so beschaffen ist, dass die genannten Undichtigkeiten nicht mehr auftreten.
Es hat sich gezeigt, dass ein einstückiger Schweißschuh aus Kunststoff den bislang bekannten Lösungen überlegen ist, wobei dieser sowohl einen schweißnahtbildenden vorderen Abschnitt als auch einen auf dem Düsenrohr zu befestigenden mittleren und/oder hinteren Abschnitt des Schweißschuhs umfasst.

Vorzugsweise ist dabei der mittlere und/oder hintere Abschnitt des Schweißschuhs, welcher dazu dient, diesen auf dem Düsenrohrabschnitt des Handschweißextruders festzulegen, wenigstens abschnittsweise zylindrisch ausgebildet. Dies eröffnet die Möglichkeit, beispielsweise zur Befestigung des Schweißschuhs auf dem Düsenrohrabschnitt eine Schlauchschelle vorzusehen, welche ringförmig um diesen zylindrischen Abschnitt legbar ist und im gespannten Zustand den Schweißschuh auf dem Düsenrohrabschnitt festklemmt.

In der Praxis hat sich jedoch gezeigt, dass es mitunter nicht ausreicht, den Schweißschuh allein mit einer Schlauchschelle auf dem Düsenrohrabschnitt zu befestigen. Im Betrieb des Handschweißextruders kann der durch die durch den Düsenrohrabschnitt geförderte heiße Kunststoffschmelze erzeugte Innendruck so hoch werden, dass der Schweißschuh nicht auf dem Düsenrohrabschnitt hält, sondern beispielsweise in axialer Richtung vom Düsenrohrabschnitt weg gedrückt wird, so dass es durch ein sich Verschieben des Schweißschuhs doch zu Undichtigkeiten kommt.

Die zuvor geschilderte Lösung mit einstückigem Schweißschuh wurde daher weiterentwickelt, mit dem Ziel, Relativbewegungen des Schweißschuhs gegenüber dem Düsenrohrabschnitt zu verhindern und eine noch sicherere dichte Befestigung des Schweißschuhs auf dem Düsenrohrabschnitt zu gewährleisten.

Die Lösung dieser Aufgabe liefert ein Handschweißextruder mit einem Schweißschuh der eingangs genannten Art mit den kennzeichnenden Merkmalen des Schutzanspruchs 1.

Erfindungsgemäß ist vorgesehen, dass für die Festlegung des Schweißschuhs auf dem Düsenrohrabschnitt Mittel vorgesehen sind, die ein Aufschieben des Schweißschuhs auf den Düsenrohrabschnitt in axialer Richtung in einer ersten Position (Einbaulage) erlauben und eine Festlegung des Schweißschuhs am Düsenrohrabschnitt nach Verdrehung des Schweißschuhs gegenüber dem Düsenrohrabschnitt um die Achse des Düsenrohrabschnitts in einer zweiten Position (Arbeitslage) bewirken.

Die genannten Mittel für die Festlegung des Schweißschuhs auf dem Düsenrohrabschnitt können beispielsweise einen oder mehrere Stifte, Keile und/oder Paßfedern umfassen, denen eine Nut oder Aussparung am Schweißschuh und/oder am Düsenrohrabschnitt zugeordnet ist. Das Prinzip der Festlegung sieht erfindungsgemäß in Abweichung vom vorbekannten Stand der Technik vor, dass der Schweißschuh nicht einfach in axialer Richtung auf den Düsenrohrabschnitt aufgeschoben wird, sondern dieser wird zunächst aufgeschoben und danach verdreht, so dass der Schweißschuh dann auf dem Düsenrohrabschnitt axial unverschiebbar festgelegt ist. Diese Befestigung kann beispielsweise nach Art eines Bajonettverschlusses erfolgen, das heißt, dass an Schweißschuh und Düsenrohrabschnitt entsprechende Elemente eines Bajonettverschlusses angebracht sind, die in einer Drehbewegung ineinandergreifen.

Die Verwendung von Stiften oder Keilen für die Festlegung ist besonders geeignet, da es sich um eine Lösung handelt, die einfach ist in der Handhabung und kostengünstig in der Herstellung. Gemäß einer bevorzugten Weiterbildung der erfindungsgemäßen Aufgabenlösung kann man beispielsweise einen Querstift verwenden, der mindestens teilweise in einer radial innenliegenden Nut des Schweißschuhs gehalten ist.

Gemäß einer möglichen bevorzugten konstruktiven Lösung kann vorgesehen sein, dass die Mittel für die Festlegung des Schweißschuhs am Düsenrohrabschnitt eine Abflachung an dem Düsenrohrabschnitt umfassen, die sich nur über einen Teil dessen Umfangs erstreckt. Diese Abflachung lässt dann ein axiales Aufschieben des Schweißschuhs auf den Düsenrohrabschnitt in einer bestimmten Drehstellung zu.

Bei der zuvor beschriebenen Lösungsvariante kann dann beispielsweise weiterhin ein am Schweißschuh gehaltener Querstift vorgesehen sein, der beim Aufschieben des Schweißschuhs auf den Düsenrohrabschnitt in axialer Richtung in der ersten Position (Einbaulage) im Bereich der Abflachung des Düsenrohrabschnitts liegt, wobei dieser Querstift bei Verdrehung des Schweißschuhs gegenüber dem Düsenrohrabschnitt um die Achse des Düsenrohrabschnitts in die zweite Position (Arbeitslage) in eine Ringnut des Düsenrohrabschnitts eingreift. Beim Aufschieben des Schweißschuhs wird dieser so aufgeschoben, dass der Querstift parallel zur Abflachung über die Abflachung geführt wird. Die genannte Ringnut kann über den Umfang gesehen im Bereich der Abflachung enden. Beim Verdrehen gelangt der Querstift aus dem Bereich der Abflachung in die Ringnut hinein. Sobald der Querstift nicht mehr parallel zur Abflachung steht, lässt sich daher der Schweißschuh nicht mehr abziehen.

Gemäß einer konstruktiven Lösungsvariante kann sich an einen zylindrischen Abschnitt des Schweißschuhs ein ringförmiger gegenüber dem zylindrischen Abschnitt radial überstehender Bund anschließen. Ein solcher Bund bildet dann quasi einen Anschlag für eine zur zusätzlichen Befestigung dienende Schlauchschelle, so dass diese nicht von dem zylindrischen Abschnitt rutschen kann. Nach dem Verdrehen in die Arbeitslage ist der Schweißschuh an dem Düsenrohr bereits gegen ein Verschieben in axialer Richtung gesichert. Durch Verwendung einer zusätzlichen Schlauchschelle kann dann noch eine Klemmkraft aufgebracht werden und der aus Kunststoff bestehende Schweißschuh kann zusammengequetscht und auf dem Düsenrohrabschnitt fixiert werden.

Der zylindrische Abschnitt für eine solche Schlauchschelle erstreckt sich dann bevorzugt zwischen diesem Bund und einem gegenüber dem zylindrischen Abschnitt allseits nach außen hin überstehenden schweißnahtbildenden blockartigen vorderen Abschnitt welcher unterschiedlichste Formen annehmen kann, je nachdem welche Art von Schweißnaht herzustellen ist. In den meisten Fällen weist dieser schweißnahtbildende vordere Abschnitt des Schweißschuhs einen eckigen Umriss auf. Im Bereich des zylindrischen Abschnitts ist die Materialstärke des Schweißschuhs geringer, so dass bei Spannen der Schelle der Kunststoff des Schweißschuhs aufgrund seiner Elastizität in ausreichendem Masse in radialer Richtung gequetscht werden kann, um so die erforderliche Kraft für die Festlegung des Schweißschuhs auf dem Düsenrohrabschnitt zu schaffen.

Besonders vorteilhaft ist, wenn der Schweißschuh einstückig aus einem einheitlichen Material ausgebildet ist, so dass es keine Abschnitte mit unterschiedlichen Wärmeausdehnungskoeffizienten mehr gibt und sich bei Erwärmung keine Spalte mehr bilden können. Ein Austreten von Extrudat aus dem Düsenrohr im Bereich des Schweißschuhs ist daher nicht mehr möglich. Nach Lösen der Schelle und Verdrehen in die Einbaulage lässt sich nun der Schweißschuh ganz einfach demontieren. Es gibt keine Verunreinigungen durch Rückstände von verfestigtem Extrudat mehr, welche das Austauschen des Schweißschuhs erschweren würden.

Vorzugsweise besteht der gesamte einstückige Schweißschuh aus PTFE oder anderen für Hochtemperaturanwendungen geeigneten Kunststoffen. Diese Kunststoffe lasen sich mechanisch bearbeiten, so dass der einstückige Schweißschuh problemlos aus einem Materialblock hergestellt werden kann.

Die in den Unteransprüchen beschriebenen Merkmale betreffen bevorzugte Weiterbildungen der erfindungsgemäßen Aufgabenlösung. Weitere Vorteile der vorliegenden Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher erläutert. Dabei zeigen:
Figur 1 einen Längsschnitt durch den vorderen Abschnitt eines Handschweißextruders gemäß einer möglichen Ausführungsvariante der vorliegenden Erfindung in der Einbaulage;
Figur 2 einen Längsschnitt durch den vorderen Abschnitt des Handschweißextruders der Ausführungsvariante von Figur 1 in der Arbeitslage;
Figur 3 eine schematisch vereinfachte Vorderansicht auf den vorderen Bereich des Handschweißextruders gemäß der vorliegenden Erfindung in der Arbeitslage, wobei man von vorn auf den Schweißschuh sieht;
Figur 4 eine perspektivische Ansicht des vorderen Abschnitts des Handschweißextruders von Figur 1-3, wobei der Schweißschuh vom Düsenrohr abgenommen ist.

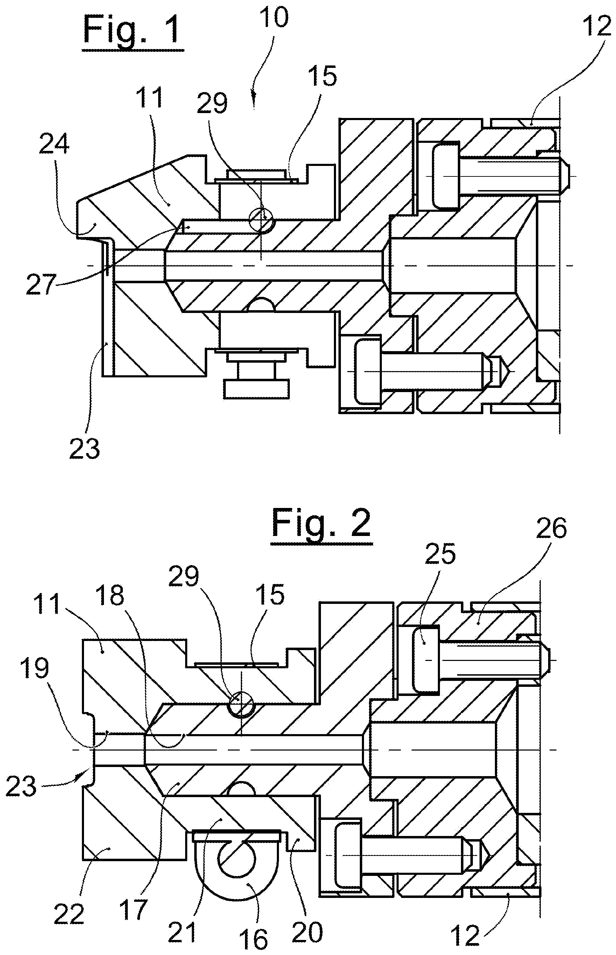

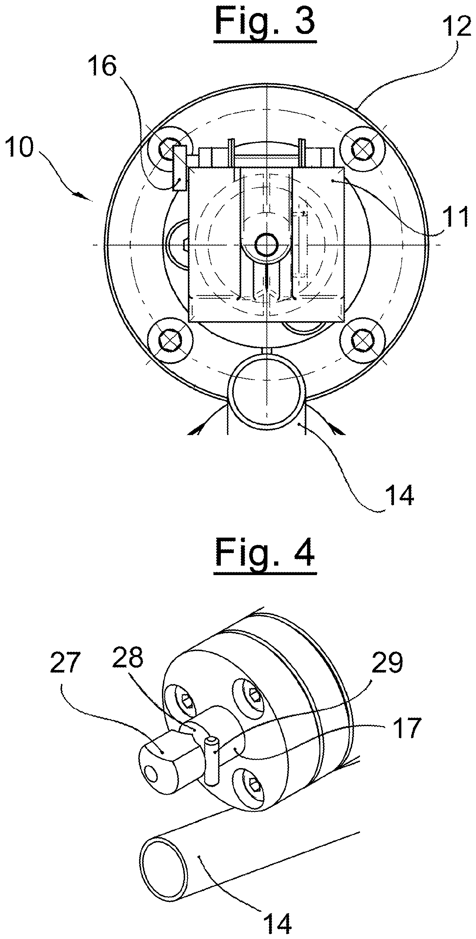

Zunächst wird auf die Figur 1 Bezug genommen, die nur den vorderen Bereich eines beispielhaften Handschweißextruders 10 mit einem erfindungsgemäßen Schweißschuh 11 zeigt. In der Schnittansicht erkennt man weiterhin den vorderen Teil des Extrudergehäuses 12. Die Heißluftdüse 14 über die Heißluft zugeführt wird, die in der Nähe des Schweißschuhs austritt, um dort die zu fügenden Werkstücke vorzuwärmen und somit auf die Schweißtemperatur zu bringen, ist in Figur 1 nicht erkennbar, aber man kann die Heißluftdüse 14 und deren Position relativ zum Schweißschuh 11 in den Figuren 3 und 4 erkennen.

In Figur 1 und 2 und auch in der Ansicht gemäß Figur 3, bei der man im Prinzip von vorn auf den vorderen Bereich des in Figur 1 dargestellten Handschweißextruders 10 schaut, erkennt man die Schelle 15 mit Spannvorrichtung 16, mittels derer der bereits auf den Düsenrohrabschnitt aufgeschobene Schweißschuh 11 in der Arbeitslage auf dem Düsenrohrabschnitt befestigbar ist. Diese Befestigung wird nachfolgend unter Bezugnahme auf die Schnittansicht gemäß Figur 2 näher erläutert.

Es ist ein aus dem Extrudergehäuse 12 nach vorn hin vorragender Düsenrohrabschnitt 17 vorhanden, innerhalb dessen sich ein Kanal 18 befindet, durch den die aus der Extruderdüse geförderte Schmelze austritt und in einen Kanal 19 des Schweißschuhs gelangt. Der Düsenrohrabschnitt 17 ist rückseitig beispielsweise über achsparallele Schrauben 25 mit der Extrudereinheit 26 verbunden. Der Schweißschuh 11 ist auf diesem Düsenrohrabschnitt 17 mittels einer Schlauchschelle 15 befestigt. Der Schweißschuh 11 umfasst von seinem hinteren dem Extrudergehäuse 12 zugewandten Ende ausgehend zu seinem vorderen Ende hin einen endseitigen zylindrischen Bund 20, einen zylindrischen Abschnitt 21, auf dem sich die Schlauchschelle 15 befindet und einen schweißnahtbildenden vorderen blockförmigen Abschnitt 22, die alle drei miteinander einstückig ausgebildet sind. Im Bereich des zylindrischen Abschnitts 21 ist der Durchmesser des Schweißschuhs geringer als im Bereich des hinteren Bundes 20, wobei auch die Materialstärke in dem zylindrischen Abschnitt 21 geringer ist, da der Schweißschuh den Düsenrohrabschnitt 17 konzentrisch umgibt und letzterer im Bereich des Bundes 20 und des zylindrischen Abschnitts 21 des Schweißschuhs 11 einen gleichbleibenden Außendurchmesser hat.

Nach vorn hin geht der Kanal 18 im Inneren des Düsenrohrabschnitts 17 in den Kanal 19 des Schweißschuhs 11 über, durch den das aufgeschmolzene Extrudat fließt. Dieser Kanal 19 befindet sich in dem schweißnahtbildenden blockförmigen Abschnitt 22, welcher zur Ausbildung der Schweißnaht dient. In diesem Abschnitt 22 befindet sich auch in an sich bekannter Weise eine Nut 23 für die Schmelze, die außen an dem Abschnitt 22 in senkrechter Richtung zur Achse des Kanals 19 verläuft. Außerdem ist vorderseitig außen an diesem Abschnitt 22 eine Nase 24 geformt (siehe Figur 1), die unterhalb der Öffnung des Kanals 19 angeordnet ist und gewährleistet, dass das Schmelzgut nur in einer gewünschten Richtung austritt.

Der vordere blockförmige Abschnitt 22, der mittlere zylindrische Abschnitt 21 und der hintere radial überstehende Bund 20 sind einstückig gebildet aus einem geeigneten Kunststoff, der ausreichend temperaturbeständig ist und sich mechanisch durch Fräsen, Bohren etc. bearbeiten lässt, insbesondere eignet sich PTFE als Kunststoff für den Schweißschuh. Zwischen vorderem Abschnitt 22 und mittleren zylindrischen Abschnitt 21 einerseits und zwischen mittlerem zylindrischen Abschnitt 21 und hinterem Bund 20 andererseits sind jeweils Durchmesserversprünge bzw. Absätze gebildet, so dass sich eine radial zurückliegende zylindrische Fläche an dem zylindrischen Abschnitt 21 ergibt. In diesem Bereich sitzt der Schweißschuh 11 koaxial auf dem Düsenrohrabschnitt 17.

Um den Schweißschuh 11 auf dem Düsenrohrabschnitt 17 zu befestigen, ist eine Schelle, insbesondere Schlauchschelle 15 vorgesehen, deren Band um den zylindrischen Abschnitt 21 herum gelegt wird. Anschließend kann mittels einer Spannvorrichtung 16 über eine Spannschraube oder dergleichen die Schlauchschelle gespannt werden, so dass der zylindrische Abschnitt 21 zusammengepresst und der Schweißschuh dicht und sicher auf dem Düsenrohrabschnitt festgelegt wird. Da der gesamte Schweißschuh 11 einstückig ist, gibt es auch keine Übergänge mit Spalten zwischen den einzelnen Abschnitten, an denen Schmelze aus dem Kanal 18, 19 austreten könnte. Ebenso ist der Werkstoff für den gesamten Schweißschuh einheitlich, so dass es keine Bereiche mit unterschiedlichen Wärmeausdehnungskoeffizienten gibt.

Der Vergleich der beiden Längsschnittdarstellungen gemäß den Figuren 1 und 2 macht deutlich, dass der Schweißschuh 11 ausgehend von Figur 1 (Einbaulage) nach Figur 2 (Arbeitslage) um 90 ° gedreht wurde. Dies hat den Hintergrund, dass der Schweißschuh 1 und der Düsenrohrabschnitt 17 so konzipiert sind, dass man in der Einbaulage gemäß Figur 1 den Schweißschuh11 in axialer Richtung auf den Düsenrohrabschnitt 17 aufschieben kann bis in die gewünschte Endposition. Wenn man danach den Schweißschuh 11 um 90 ° um die Achse des Düsenrohrabschnitts dreht, gelangt er in die Arbeitslage, in der ein solcher Eingriff besteht, dass man den Schweißschuh dann nicht mehr in axialer Richtung bewegen kann. Dazu ist eine Abflachung 27 an dem ansonsten zylindrischen vordersten Abschnitt des Düsenrohrs vorgesehen, die man in Figur 1 aber insbesondere gut in der Ansicht gemäß Figur 4 erkennen kann. Axial zum Extrudergehäuse hin schließt sich an diese Abflachung 27 eine Ringnut 28 an. Für die Befestigung des Schweißschuhs in der Arbeitslage ist ein Querstift 29 vorgesehen, der innenseitig am Schweißschuh in einer Nut so festgelegt ist, dass er nur teilweise radial einwärts vorsteht. Diesen Querstift sieht man in den Figuren 1 und 2 und auch in Figur 4. Der Schweißschuh 11 lässt sich wegen diese Querstifts 29 nur dann in axialer Richtung aufschieben bzw. abziehen, wenn der Querstift 29 parallel zu der Abflachung 27 über dieser platziert ist, das heißt nur in der in Figur 1 dargestellten Einbaulage. Man erkennt dort den Freiraum für den Querstift 29, der durch die Abflachung 27 am Düsenrohr 17 zwischen Düsenrohr und Schweißschuh entsteht. Figur 1 zeigt den aufgeschobenen Schweißschuh 11 in der axialen Endposition aber noch vor dem Verdrehen.

Nun wird der Schweißschuh 11 um 90 ° um die Achse des Düsenrohrabschnitts 17 verdreht in die in Figur 2 dargestellte Arbeitslage. Dadurch gelangt der Querstift 29 in die Ringnut 28 und verlässt den Bereich der Abflachung, so dass er dann den vordersten Abschnitt des Düsenrohrs 17 hintergreift, wie man in der schematischen Ansicht gemäß Figur 4 gut erkennen kann. In der dann erreichten Arbeitslage befindet sich der Querstift 29 über den Umfang betrachtet jenseits der Abflachung 27, so dass ein Abziehen des Schweißschuhs in Gegenrichtung dann nicht mehr möglich ist. Dies verdeutlicht Figur 4, wird aber auch aus dem Längsschnitt gemäß Figur 2 deutlich, da wie man sieht in dieser Position die in Figur 1 erkennbare Abflachung 27 nicht mehr sichtbar ist. Der Querstift 29 ist dann quasi mit seiner radial inneren Hälfte formschlüssig in der Ringnut 28 (siehe Figur 4) des Düsenrohrabschnitts aufgenommen, während sich die radial äußere Hälfte des Querstifts 29 in dem Schweißschuh befindet. Damit ergibt sich eine spielfreie Verbindung zwischen Schweißschuh 11 und Düsenrohrabschnitt 17. Das Verpressen des Schweißschuhs 11 auf dem Düsenrohrabschnitt 17 geschieht dann anschließend mittels der über die Spannvorrichtung 16 betätigbaren Schlauchschelle 15. Bei einem derart befestigten Schweißschuh kann auch unter hohem Druck durch den Kanal 18/ 19 in Düsenrohr und Schweißschuh gefördertes Extrudat nicht etwa im Übergangsbereich zwischen Schweißschuh und Düsenrohr austreten. Soll der Schweißschuh ausgetauscht werden, wird nach Lösen der Schlauchschelle 15 der Schweißschuh 11 um 90 ° in die Gegenrichtung gedreht in die Einbaulage gemäß Figur 1 und kann dann vom Düsenrohr abgezogen werden.

### Bezugszeichenliste

- 10: Handschweißextruder
- 11: Schweißschuh
- 12: Extrudergehäuse
- 14: Heißluftdüse
- 15: Schelle
- 16: Spannvorrichtung
- 17: Düsenrohrabschnitt
- 18: Schmelzekanal
- 19: Kanal im Schweißschuh
- 20: Bund
- 21: zylindrischer Abschnitt
- 22: vorderer Abschnitt
- 23: Nut
- 24: Nase
- 25: Schrauben
- 26: Extrudereinheit
- 27: Abflachung
- 28: Ringnut
- 29: Querstift

## Patentansprüche

1. Handschweißextruder (10) umfassend eine Extrudereinheit mit Extruderschnecke und Extruderdüse, an die sich in Förderrichtung des Extrudats ein gegenüber einem Extrudergehäuse (12) vorstehender Düsenrohrabschnitt (17) anschließt mit einem inneren Kanal, aus dem das Extrudat austritt, sowie weiter umfassend einen Schweißschuh (11) am vorderen Ende des Geräts, über den das Schmelzgut ausgebracht wird, wobei der Schweißschuh (11) auf dem Düsenrohrabschnitt (17) befestigbar ist,
wobei ein einstückiger Schweißschuh (11) aus Kunststoff vorgesehen ist, der sowohl einen schweißnahtbildenden vorderen Abschnitt als auch einen auf dem Düsenrohrabschnitt (17) zu befestigenden mittleren und/oder hinteren Abschnitt des Schweißschuhs (11) umfasst,
**dadurch gekennzeichnet, dass** der Schweißschuh (11) mittels eines Bajonettverschlusses auf dem Düsenrohrabschnitt (17) festlegbar ist und dass für die Festlegung des Schweißschuhs (11) auf dem Düsenrohrabschnitt (17) Mittel vorgesehen sind, die ein Aufschieben des Schweißschuhs (11) auf den Düsenrohrabschnitt (17) in axialer Richtung in einer ersten Position erlauben und eine Festlegung des Schweißschuhs (11) am Düsenrohrabschnitt (17) nach Verdrehung des Schweißschuhs (11) gegenüber dem Düsenrohrabschnitt (17) um die Achse des Düsenrohrabschnitts (17) in einer zweiten Position bewirken, wobei die Mittel für die Festlegung des Schweißschuhs (11) am Düsenrohrabschnitt (17) eine Abflachung (27) an dem Düsenrohrabschnitt (17) umfassen, die sich nur über einen Teil dessen Umfangs erstreckt,
wobei am Düsenrohrabschnitt (17) eine Ringnut (28) vorgesehen ist, die sich am Umfang des Düsenrohrabschnitts (17) bis in den Bereich der Abflachung (27) hinein erstreckt und für die Befestigung des Schweißschuhs (11) am Düsenrohrabschnitt (17) in der zweiten Position ein Querstift (29) vorgesehen ist, der mindestens teilweise in einer radial innenliegenden Nut des Schweißschuhs (11) gehalten ist.

2. Handschweißextruder nach Anspruch 1,
**dadurch gekennzeichnet, dass** die Mittel für die Festlegung des Schweißschuhs (11) auf dem Düsenrohrabschnitt (17) einen oder mehrere Stifte, Keile und/oder Paßfedern umfassen, denen eine Nut oder Aussparung am Schweißschuh und/oder am Düsenrohrabschnitt zugeordnet ist.

3. Handschweißextruder nach Anspruch 1 oder 2, **dadurch gekennzeichnet, dass** der am Schweißschuh (11) gehaltene Querstift (29) beim Aufschieben des Schweißschuhs auf den Düsenrohrabschnitt in axialer Richtung in der ersten Position im Bereich der Abflachung (27) des Düsenrohrabschnitts liegt und dieser Querstift bei Verdrehung des Schweißschuhs gegenüber dem Düsenrohrabschnitt um die Achse des Düsenrohrabschnitts in die zweite Position in die Ringnut eingreift.

4. Handschweißextruder nach einem der Ansprüche 1 bis 3,
**dadurch gekennzeichnet, dass** zur Befestigung des Schweißschuhs auf dem Düsenrohrabschnitt weiterhin wenigstens eine Schelle (15) vorgesehen ist, welche ringförmig um einen zylindrischen Abschnitt (21) des Schweißschuhs(11) legbar ist und im gespannten Zustand den Schweißschuh (11) auf dem Düsenrohrabschnitt (17) festklemmt.

5. Handschweißextruder nach einem der Ansprüche 1 bis 4,
**dadurch gekennzeichnet, dass** der einstückige Schweißschuh (11) aus PTFE oder einem hoch temperaturfesten Kunststoff mit ähnlichen Eigenschaften besteht.

## Claims

1. A handheld extrusion welder (10)
comprising an extruder unit with extruder screw and extrusion die, wherein a die pipe section (17) with an inner channel, from which the extrudate exits, is arranged adjacent to the extrusion die in the transport direction of the extrudate and protrudes from an extruder housing (12), and furthermore comprising a welding shoe (11) on the front end of the device, through which the molten material is discharged, wherein the welding shoe (11) can be fixed on the die pipe section (17), and wherein a one-piece welding shoe (11) of plastic is provided, which comprises a front section forming the welding seam, as well as a central and/or rear section of the welding shoe (11) to be fixed on the die pipe section (17),
**characterized in that** the welding shoe (11) can be fixed on the die pipe section (17) by means of a bayonet fixture, and **in that** means for fixing the welding shoe (11) on the die pipe section (17) are provided, which make it possible to axially push the welding shoe (11) on the die pipe section (17) into a first position and cause the welding shoe (11) to be fixed on the die pipe section (17) in a second position after the welding shoe (11) has been turned relative to the die pipe section (17) about the axis of the die pipe section (17), wherein the means for fixing the welding shoe (11) on the die pipe section (17) comprise a flattening (27) on the die pipe section (17), which only extends over part of the circumference thereof,
wherein an annular groove (28) is provided on the die pipe section (17) and extends as far as into the region of the flattening (27) on the circumference of the die pipe section (17), and
wherein a cross pin (29) is provided for fixing the welding shoe (11) on the die pipe section (17) in the second position and is at least partially held in a radially inner groove of the welding shoe (11).

2. The handheld extrusion welder according to claim 1,
**characterized in that** the means for fixing the welding shoe (11) on the die pipe section (17) comprise one or more pins, wedges and/or feather keys, to which a groove or recess on the welding shoe and/or on the die pipe section is assigned.

3. The handheld extrusion welder according to claim 1 or 2,
**characterized in that** the cross pin (29) held on the welding shoe (11) lies in the region of the flattening (27) of the die pipe section when the welding shoe is axially pushed on the die pipe section into the first position, and **in that** this cross pin engages into the annular groove when the welding shoe is turned into the second position relative to the die pipe section about the axis of the die pipe section.

4. The handheld extrusion welder according to one of claims 1-3,
**characterized in that** at least one clamp (15) is furthermore provided for fixing the welding shoe on the die pipe section, wherein said clamp can be annularly placed around a cylindrical section (21) of the welding shoe (11) and clamps the welding shoe (11) on the die pipe section (17) in the tensioned state.

5. The handheld extrusion welder according to one of claims 1-4,
**characterized in that** the one-piece welding shoe (11) consists of PTFE or a plastic with high temperature stability and similar properties.

## Revendications

1. Extrudeuse soudeuse manuelle (10), comprenant une unité d'extrusion, une vis d'extrusion et une buse d'extrusion à laquelle se raccorde dans le sens de transport du produit extrudé une section tubulaire de buse (17) dépassant d'un boîtier de l'extrudeuse (12) doté d'un un canal intérieur duquel sort le produit moulé et comportant en outre un patin de soudage (11) situé à l'extrémité avant de l'appareil et par lequel le produit extrudé est évacué, le patin de soudage (11) pouvant être fixé sur la section tubulaire de buse (17),
étant prévu un patin de soudage monobloc (11) en matière plastique qui comprend aussi bien une section avant formant le cordon de soudure qu'une section médiane et/ou arrière à fixer sur la section tubulaire de buse (17) du patin de soudage (11),
**caractérisée en ce que** le patin de soudage (11) peut être fixé au moyen d'une fermeture à baïonnette sur la section tubulaire de buse (17) et qu'il est prévu, pour la fixation du patin de soudage (11) sur la section tubulaire de buse (17), des moyens qui permettent de glisser le patin de soudage (11) sur la section tubulaire de buse (27) dans un sens axial dans une première position et une fixation du patin de soudage (11) à la section tubulaire de buse (17) après rotation du patin de soudage (11) par rapport à la section tubulaire de buse (17) autour de l'axe de la section tubulaire de buse (17) dans une seconde position, les moyens de fixation du patin de soudage (11) à la section tubulaire de buse comprenant, sur la section tubulaire de buse (17), un replat (27) qui s'étend seulement sur une partie de sa circonférence, étant prévu au niveau de la section tubulaire de buse (17) une rainure annulaire (28) qui s'étend sur la circonférence de la section tubulaire de buse (17) jusque dans la zone du replat (27) et étant prévue, pour la fixation du patin de soudage (11) à la section tubulaire de buse (17) dans la seconde position, une tige transversale (29) qui est maintenue au moins partiellement dans une rainure radialement intérieure du patin de soudage (11).

2. Soudeuse extrudeuse à main selon la revendication 1,
**caractérisée en ce que** les moyens de fixation du patin de soudage (11) à la section tubulaire de buse (17) comprennent un ou plusieurs tiges, coins et/ou clavettes auxquels est associé une rainure ou un évidement du patin de soudage et/ou de la section tubulaire de buse.

3. Soudeuse extrudeuse à main selon la revendication 1 ou 2, **caractérisée en ce que** la tige transversale (29) maintenue dans au niveau du patin de soudage (11), quand on glisse le patin de soudage sur la section tubulaire de buse dans le sens axial dans la première position, se situe au niveau du replat (27) de la section tubulaire de buse et que cette tige transversale, en cas de rotation du patin de soudage par rapport à la section tubulaire de buse autour de l'axe de la section tubulaire de buse dans la seconde position, s'engrène dans la rainure annulaire.

4. Soudeuse extrudeuse manuelle selon une des revendications 1 à 3,
**caractérisée en ce que**, pour fixer le patin de soudage sur la section tubulaire de buse, il est prévu en outre au moins une coque (15) qui peut être posée ou en forme d'anneau autour d'une section cylindrique (21) du patin de soudage (11) et, à l'état serré, bloque le patin de soudage (11) sur la section tubulaire de buse (17).

5. Soudeuse extrudeuse à main selon une des revendications 1 à 4,
**caractérisée en ce que** le patin de soudage monobloc (11) est composé de PTFE ou d'un plastique résistant aux hautes températures et doté de propriétés similaires.
